# EUROPEAN PATENT APPLICATION

(11) **EP 4 471 519 A1**
(43) Date of publication of application: **04.12.2024**
(21) Application number: 23746942.4
(22) Date of filing: 24.01.2023
(51) Int. Cl.: G05B 19/4155, B23Q 17/09, G05B 19/18

(54) **WEAR AMOUNT PREDICTING DEVICE, WEAR AMOUNT PREDICTING METHOD, CONTROL PROGRAM, AND RECORDING MEDIUM**

(30) Priority: 26.01.2022 JP 2022010197
(71) Applicant: Kyocera Corporation, Kyoto-shi, Kyoto 612-8501 (JP); Rist Inc., Kyoto-shi, Kyoto 600-8102 (JP)
(72) Inventor: SHIBATA, Masahiro, Kyoto-shi, Kyoto 612-8501 (JP); KATSU, Keitaro, Kyoto-shi, Kyoto 600-8102 (JP); MIFUNE, Satoshi, Kyoto-shi, Kyoto 600-8102 (JP)
(74) Representative: Viering, Jentschura & Partner mbB Patent- und Rechtsanwälte
(86) International application number: PCT/JP2023/002099
(87) International publication number: WO 2023/145731

(57) **Abstract**

Provided is a wear amount prediction apparatus including: a prediction unit that predicts, with use of a trained model, an amount of wear of a cutting tool in accordance with a processing time; and a display that displays information which is based on a result of prediction, in which a trained model is generated by performing machine learning with training data using a dataset that includes: information which pertain to a cutting tool, a condition which concerns cutting, and information which pertain to a workpiece; and a processing time for which a cutting tool was used, the amount of wear of the cutting tool which is due to processing, an initial wear time which is from the start of cutting by the cutting tool until the completion of initial wear, and an initial wear amount which indicates the amount of wear of the cutting tool when the initial wear time has elapsed.

## Description

### TECHNICAL FIELD

The present disclosure relates to a wear amount prediction apparatus which predicts the amount of wear of a cutting tool due to cutting, a wear amount prediction method, a control program for use in the wear amount prediction apparatus, and a storage medium in which the control program is stored.

### BACKGROUND OF INVENTION

Cutting tools experience wear through use. Conventionally, the extent of wear due to use has often been predicted based on the workers' experiences. Patent Literatures 1 and 2 disclose configurations in which the amount of wear is predicted using a prediction formula. Patent Literature 3 discloses a configuration in which wear is predicted by inputting an image of a blade portion, processing conditions, and workpiece specifications into a trained model.

### CITATION LIST

### PATENT LITERATURE

Patent Literature 1
   Japanese Patent Application Publication Tokukai No. 2004-255514
Patent Literature 2
   Japanese Patent Application Publication Tokukai No. 2008-221454
Patent Literature 3
   Japanese Patent Application Publication Tokukai No. 2021-070114

### SUMMARY

In an aspect of the present disclosure, a wear amount prediction apparatus includes: a prediction unit that predicts, with use of a trained model, an amount of wear of a cutting tool in accordance with a processing time; and a display that displays information which is based on a result of prediction by the prediction unit, wherein: the trained model being generated by performing machine learning with training data using input data and output data as a dataset, the input data being information which pertains to the cutting tool, a condition which concerns cutting, and information which pertains to a workpiece and the output data being a processing time for which the cutting tool was used, the amount of wear of the cutting tool which is due to processing, an initial wear time which is from a start of the cutting by the cutting tool until completion of initial wear, and an initial wear amount which indicates an amount of wear of the cutting tool when the initial wear time has elapsed; and the prediction unit inputs, into the trained model, data that includes information pertaining to the cutting tool, a condition concerning cutting, and information pertaining to a workpiece, and then predicts the amount of wear.

In an aspect of the present disclosure, a wear amount prediction method includes: predicting, with use of a trained model, an amount of wear of a cutting tool in accordance with a processing time; and displaying information which is based on a result in the predicting, wherein: the trained model being generated by performing machine learning with training data using input data and output data as a dataset, the input data being information which pertains to the cutting tool, a condition which concerns cutting, and information which pertains to a workpiece and the output data being a processing time for which the cutting tool was used, the amount of wear of the cutting tool which is due to processing, an initial wear time which is from a start of the cutting by the cutting tool until completion of initial wear, and an initial wear amount which indicates an amount of wear of the cutting tool when the initial wear time has elapsed; and in the predicting, data that includes information pertaining to the cutting tool, a condition concerning cutting, and information pertaining to a workpiece is input into the trained model, and then the amount of wear is predicted.

In each aspect of the present disclosure, a wear amount prediction apparatus can be realized by a computer. The computer is operated based on (i) a wear amount prediction apparatus control program for causing the computer to realize the wear amount prediction apparatus by causing the computer to operate as each section (software element) included in the wear amount prediction apparatus and (ii) a computer-readable storage medium in which the wear amount prediction apparatus control program is stored. Such a control program and a computer-readable storage medium are included in the scope of the present disclosure.

### BRIEF DESCRIPTION OF THE DRAWINGS

FIG. 1 is a functional block diagram illustrating the main configuration of a wear amount prediction apparatus in an embodiment of the present disclosure.
FIG. 2 illustrates an example of training data.
FIG. 3 illustrates the details of the training data.
FIG. 4 is a graph illustrating cutting data when actual cutting was performed.
FIG. 5 is a graph for explaining a prediction method employed by a prediction unit.
FIG. 6 illustrates an example in which a graph is displayed as a prediction result produced by the wear amount prediction apparatus.
FIG. 7 illustrates an example in which a graph is displayed as a prediction result produced by the wear amount prediction apparatus.
FIG. 8 illustrates an example of a screen into which data is input.
FIG. 9 illustrates an example of a screen which exhibits prediction results.
FIG. 10 is a flowchart illustrating a flow of a process executed by the wear amount prediction apparatus.
FIG. 11 is a functional block diagram illustrating the main configuration of a wear amount prediction apparatus in another embodiment of the present disclosure.
FIG. 12 illustrates an example of wear amount data which is stored in a database (DB).
FIG. 13 illustrates an example of the screen displaying extraction results produced by a database information extraction unit.
FIG. 14 is a functional block diagram illustrating the main configurations of a wear amount prediction apparatus and a database updating apparatus in yet another embodiment of the present disclosure.
FIG. 15 illustrates the degrees of importance of factors that affected the predictions of the presence/absence of a defect, a final processing time, and a final wear amount.

### DESCRIPTION OF EMBODIMENTS

### Embodiment 1

The following description will discuss an embodiment of the present disclosure in detail. In the present embodiment, a wear amount prediction apparatus 1 uses a trained model 40, which has been trained by machine learning, to predict the amount of wear of a cutting tool due to use.

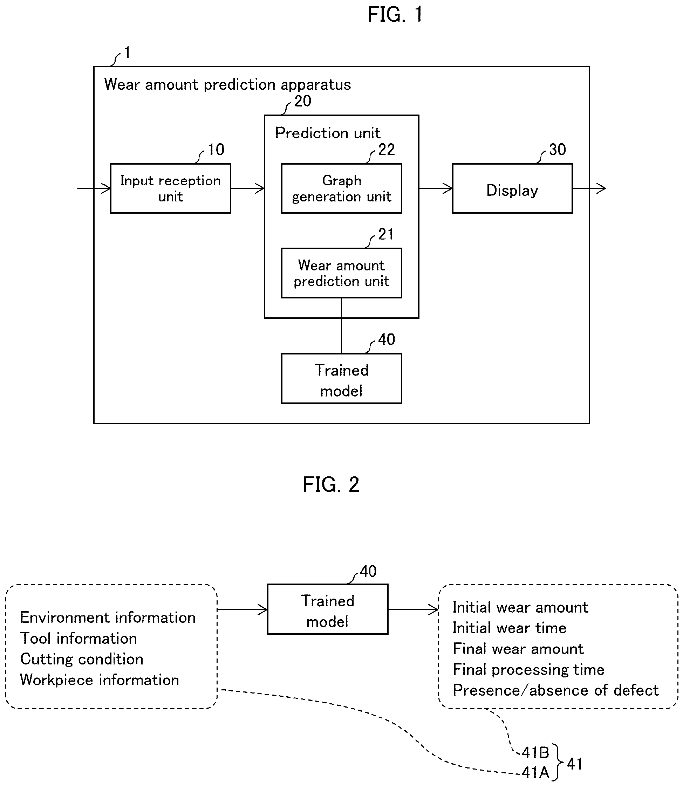

First, with reference to FIG. 1, the main configuration of the wear amount prediction apparatus 1 will be discussed. FIG. 1 is a functional block diagram illustrating the main configuration of the wear amount prediction apparatus 1. As illustrated in FIG. 1, the wear amount prediction apparatus 1 includes an input reception unit 10, a prediction unit 20, a display 30, and the trained model 40.

The input reception unit 10 receives an input into the wear amount prediction apparatus 1. In the present embodiment, input data includes data pertaining to a cutting tool, data pertaining to a processing condition, and data pertaining to a workpiece.

On the basis of the input data received at the input reception unit 10, the prediction unit 20 predicts the amount of wear of a cutting tool. The prediction unit 20 includes a wear amount prediction unit 21 and a graph generation unit 22.

The wear amount prediction unit 21 uses the trained model 40 to predict an initial wear time, an initial wear amount, a final processing time, a final wear amount, and/or a defect probability, from the input data received at the input reception unit 10. It should be noted here that the "initial wear time" refers to a period of time which is from the start of cutting until a workpiece is acclimatized to a cutting tool and during which the amount of wear is relatively high; the "initial wear time" is needed for so-called initial wear (severe wear). In contrast to initial wear, which involves a relatively high amount of wear, the wear that progresses more gradually and stably is typically called steady-state wear (mild wear).

The "initial wear amount" refers to the amount of wear of a cutting tool during the initial wear time. By measuring the transitions of the processing time and the amount of wear under predetermined conditions, the initial wear time and the initial wear amount under the conditions can be evaluated in advance. The "final processing time" refers to the maximum amount of time during which a workpiece can be processed until a defect occurs in the cutting tool through steady-state wear. The "final wear amount" refers to the amount of wear during the final processing time. The "defect" refers to a crack that occurs in a cutting tool. In addition to the initial wear time and the initial wear amount, the final processing time, the final wear amount, and the presence/absence of a defect under the predetermined conditions can be evaluated on the basis of data obtained by from the aforementioned measurements.

Examples of the defect include wear-based cracks, chipping, welding-based cracks, mechanical cracks, thermal cracking, and shell-like peeling (flaking). The "defect probability" is a probability of a defect occurring in a cutting tool. Predicting the defect probability allows a user to recognize the probability of a defect occurring in the cutting tool.

Based on the initial wear time, the initial wear amount, the final processing time, and the final wear amount which have been predicted by the wear amount prediction unit 21, the graph generation unit 22 generates a graph with the processing time on the horizontal axis and the amount of wear on the vertical axis.

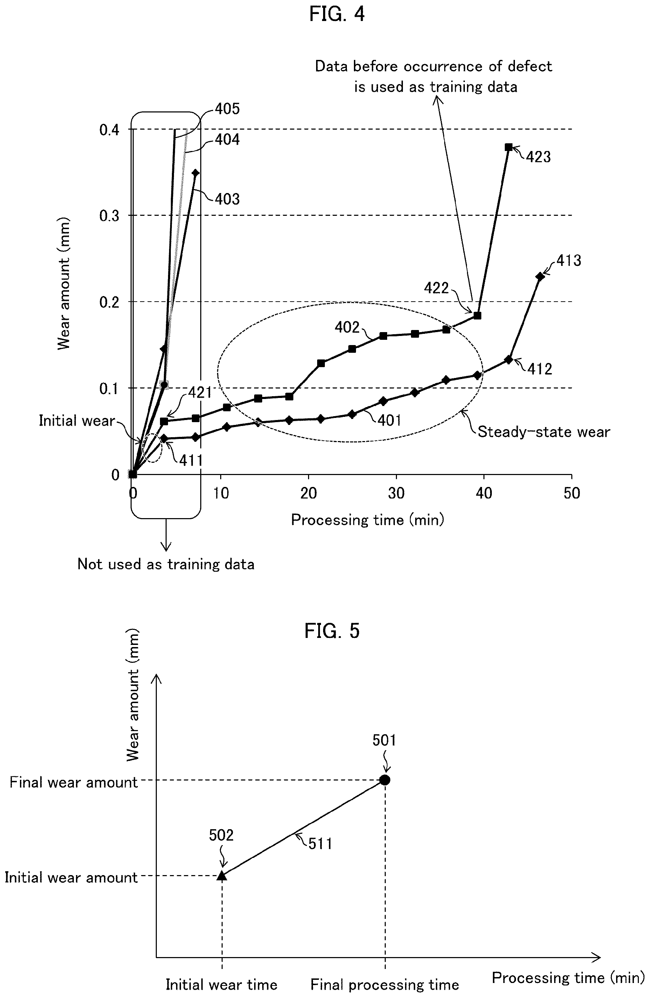

With reference to FIG. 5, a method in which the graph generation unit 22 generates the graph will be discussed below. FIG. 5 is a graph with the processing time (min) on the horizontal axis and the wear amount (mm) on the vertical axis. The graph generation unit 22 generates a straight line 511 that connects a point 502 and a point 501, where the point 502 indicates the initial wear time and the initial wear amount which are predicted by the wear amount prediction unit 21 and the point 501 indicates the final processing time and the final wear amount which are predicted by the wear amount prediction unit 21.

The prediction unit 20 notifies of the display 30 of the graph generated by the graph generation unit 22 as a prediction result, and causes the display 30 to display the graph.

The display 30 displays the prediction result which is generated by the prediction unit 20 or information which is based on the prediction result. That is, the display 30 may display the information based on the prediction result without displaying the prediction result itself. The display 30, instead of being provided in the wear amount prediction apparatus 1, may be provided as an external apparatus outside the wear amount prediction apparatus 1. The external apparatus is not limited, provided that the external apparatus includes a display capable of displaying information, such as a personal computer, a tablet, a smartphone, or the like. A screen example, which will be discussed later, can be adapted to a personal computer, which has a large screen size or to a smartphone, which has a small screen size. The size, the position, and the like of the display region may be adjusted as appropriate according to the screen size.

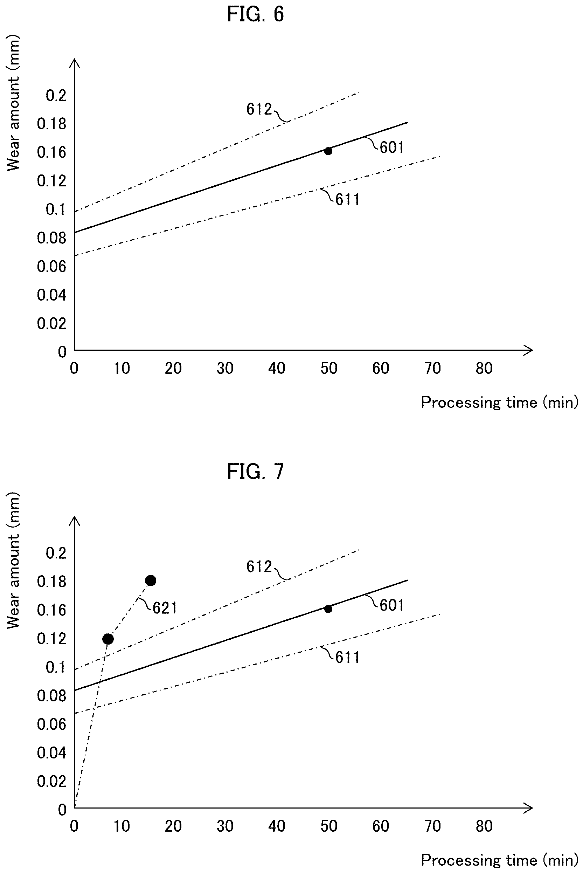

Next, with reference to FIGs. 6 and 7, an example of the prediction result produced by the wear amount prediction apparatus 1 and displayed on the display 30 will be discussed. FIGs. 6 and 7 each illustrate an example in which a graph is displayed as a prediction result produced by the wear amount prediction apparatus 1.

A graph 601 in FIG. 6 indicates the prediction result produced by the wear amount prediction apparatus 1. As indicated by the graph 601, the wear amount prediction apparatus 1 exhibits the prediction result as a graph. Thus, a user can recognize the amount of wear during any processing time. A graph 611 and a graph 612 in FIG. 6 indicate a range of errors in the prediction result. The graph 611 indicates the lower limit of the error, and the graph 612 indicates the upper limit of the error. Thus, the amount of wear which at least falls between the graph 611 and the graph 612 is predicted.

FIG. 7 illustrates an example in which a graph 621 indicating the results of extraction from the database is displayed on the graph illustrated in FIG. 6. The graph 621 indicates the result of extracting, from the database, the past cutting data corresponding to the data which is identical to the input data. The details of the process of extraction from the database will be discussed later. Displaying the graph 621 allows a user to recognize the situation where cutting was performed under the same conditions in the past.

As has been discussed, the display 30 displays the prediction results produced by the prediction unit 20, with a graph that allows the processing time and the amount of wear to be viewed. Thus, since a graph allowing the processing time and the amount of wear to be viewed is displayed, a user can recognize the relationship between the processing time and the amount of wear easily and with easy visualization.

### [Details of trained model 40]

The trained model 40 is generated by a machine learning algorithm using training data 41. The machine learning algorithm may be any method, and may be, for example, any of the following methods or a combination thereof:
· Gradient boosting decision tree (GBDT)
· Support vector machine (SVM)
· Clustering
· Inductive logic programming (ILP)
· Genetic programming (GP)
· Baysian network (BN)
· Neural network (NN)

If a neural network is to be used, a convolutional neural network (CNN) that includes a convolution process may be used. More specifically, convolutional layers that perform convolution operations may be provided as one or more layers included in the neural network, and filter operations (product-sum operations) may be applied to input data input into the layers. When the filter operation is performed, a process such as padding may be used in combination, or a stride width set as appropriate may be employed.

As the neural network, a multilayer or super multilayer neural network having several tens to several thousands of layers may be used.

Next, with reference to FIG. 2, the training data 41, which is used for machine learning of the trained model 40, will be discussed. FIG. 2 illustrates an example of the training data 41. The training data 41 is a dataset including training input data 41A which is the input data of the training data and training output data 41B in which the output data of the training data. As illustrated in FIG. 2, the training input data 41A may include environment information, tool information, a cutting condition, and workpiece information. The training output data 41B may include an initial wear amount, an initial wear time, a final wear amount, a final processing time, and the presence/absence of a defect. As discussed in detail later, the tool information pertains to a cutting tool. The cutting condition concerns cutting. The workpiece information pertains to a workpiece.

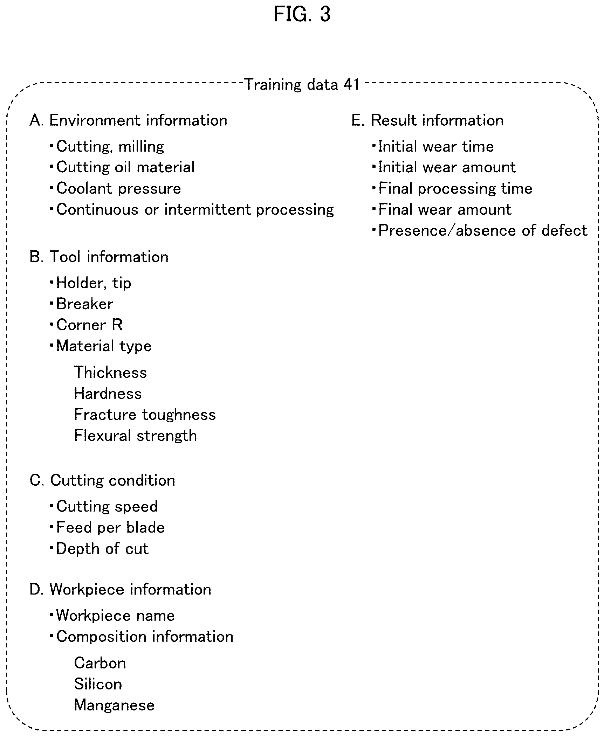

Next, with reference to FIG. 3, the training data 41 will be discussed in detail. FIG. 3 illustrates the details of the training data 41.

As illustrated in FIG. 3, the environment information of the training input data 41A may include information pertaining to "processing machine", "cutting oil material", "coolant pressure", and "continuous or intermittent processing".

The tool information may include information pertaining to "holder, tip", "breaker", "corner R", "material type", "thickness", "hardness", "fracture toughness", and "flexural strength". The cutting condition may include information pertaining to "cutting speed", "feed per blade", and "depth of cut". The workpiece information may include information pertaining to "workpiece name" and "composition". The details are as follows:
· The "processing machine" is information indicating whether a machine that performs processing is a "lathe" or a "milling machine". Since the form of processing considerably differs between lathe processing (turning) and milling machine processing (milling), the information is useful as training data.
· The "cutting oil material" is information indicating whether oil is to be applied during processing or not (dry) and whether air is to be blown, and if oil is to be applied, whether the type of oil is oil-based or watersoluble.
· The "coolant pressure" is information indicating the pressure of the oil output during the processing. Because coolant pressure can affect the lifespan of the cutting tool, the information is useful as training data.
· The "continuous or intermittent processing" is information indicating whether the blade portion of the cutting tool during the processing is in contact with the workpiece constantly or intermittently.
· The "holder, tip" is information indicating the model number of the cutting tool holder and the model number of the tip.
· The "breaker" is information indicating the structure of the surface (rake face) along the blade edge of the tip. The shape of the rake face allows for the control of chips. That is, since the progression of wear caused by the chips changes, the information is useful as training data for evaluating the wear of the cutting tool.
· The "corner R" is information indicating the roundness of the tip end of the tip.
· The "material type" is information indicating the composition of the tip.
· The "thickness" is information indicating the thickness of the coating covering the tip.
· The "hardness" is information indicating the hardness of the coating.
· The "fracture toughness" is information indicating the toughness of the base material of the tip. The toughness of the base material affects the presence/absence of a defect in the tip.
· The "flexural strength" is information indicating the toughness of the base material of the tip. As discussed above, the toughness of the base material affects the presence/absence of a defect in the tip.
· The "cutting speed" is information indicating the rotational speed.
· The "feed per blade" is information indicating the speed at which the cutting tool advances per rotation.
· The "depth of cut" is information indicating the thickness amount removed by the cutting tool per pass. For example, the width of the cut refers to the width of the chips, and corresponds to the width of the chips removed per pass.
· The "workpiece name" is information indicating the name of the material to be cut by the cutting tool.
· The "composition" is information indicating the composition of the workpiece, and indicates the amounts of carbon, silicon, and manganese contained.

The training output data 41B may include "initial wear time", initial wear amount, "final processing time", "final wear amount", and "presence/absence of defect".
· The "initial wear time" refers to a period of time from the start of cutting until a workpiece is acclimatized to a cutting tool and is needed for so-called initial wear.
· The "initial wear amount" refers to the amount of wear of a cutting tool during the initial wear time.
· The "final processing time" refers to a period of time needed for the processing of a workpiece. If a defect occurred, the "final processing time" refers to a period of time until immediately before the defect occurred.
· The "final wear amount" refers to the amount of wear during the final processing time.
· The "presence/absence of defect" indicates whether a defect is in the tip after the processing.

In the present embodiment, the training output data 41B does not include a case where a defect occurred in a cutting tool within a predetermined time from the start of cutting. Examples of the situation where a defect occurs during initial wear shortly after the start of cutting include: a case where incorrect cutting conditions are set, and cutting cannot be considered to be performed properly; and a case where a sudden, accidental defect occurs in a cutting tool. These are all specific situations and are thus unsuitable as training data for prediction of the steady wear amount of the cutting tool by the prediction unit 20.

With reference to FIG. 4, the content of the training output data 41B will be discussed. FIG. 4 is a graph illustrating cutting data when cutting was actually performed, and the horizontal axis indicates the processing time (min) and the vertical axis indicates the wear amount (mm). FIG. 4 illustrates five cases from a graph 401 to a graph 405.

A point 411 in the graph 401 indicates the initial wear time and the initial wear amount. Therefore, the processing time and the amount of wear indicated by the point 411 serve as training data for the initial wear time and the initial wear amount. Since a defect occurs at a point 413, a point 412 indicates the final processing time and the final wear amount. Therefore, the processing time and the amount of wear indicated by the point 412 serve as training data for the final processing time and the final wear amount.

Similarly to the graph 401, in the graph 402, a point 421 indicates the initial wear time and the initial wear amount. Therefore, the processing time and the amount of wear indicated by the point 421 serve as training data for the initial wear time and the initial wear amount. Since a defect occurs at a point 423, a point 422 indicates the final processing time and the final wear amount. Therefore, the processing time and the amount of wear indicated by the point 422 serve as training data for the final processing time and the final wear amount.

In a graph 403, a graph 404, and the graph 405, a defect occurs before the processing time reaches 10 minutes (predetermined time). Therefore, the graph 403, the graph 404, and the graph 405 are not put to use as training data. The apparatus that generates the trained model 40 may use a threshold to determine whether a graph is to be included in training data. That is, when the amount of wear exceeds a threshold within a predetermined time, the apparatus may determine that a defect occurred within the predetermined time and exclude such data from training data.

Thus, by not using, as training data, cutting data in which a defect occurred within a predetermined time, data which is undesirable for predicting the amount of wear of a cutting tool due to cutting can be excluded, and therefore an accurate prediction can be performed.

As has been discussed, the training data 41 includes no information corresponding to a cutting tool in which a defect has occurred within an unusually short period of time after processing started. When a defect occurs in a cutting tool within an unusually short period of time, a possible cause is that, for example, incorrect cutting conditions are set. By excluding a cutting tool with initial failure from the training data 41, the amount of wear can be predicted while excluding the effect of the initial failure. Thus, the prediction accuracy can be increased. The unusually short period of time is, for example, 10 minutes.

The training data 41 is an example, and is not limited as described above.

### [Example of screen of display 30]

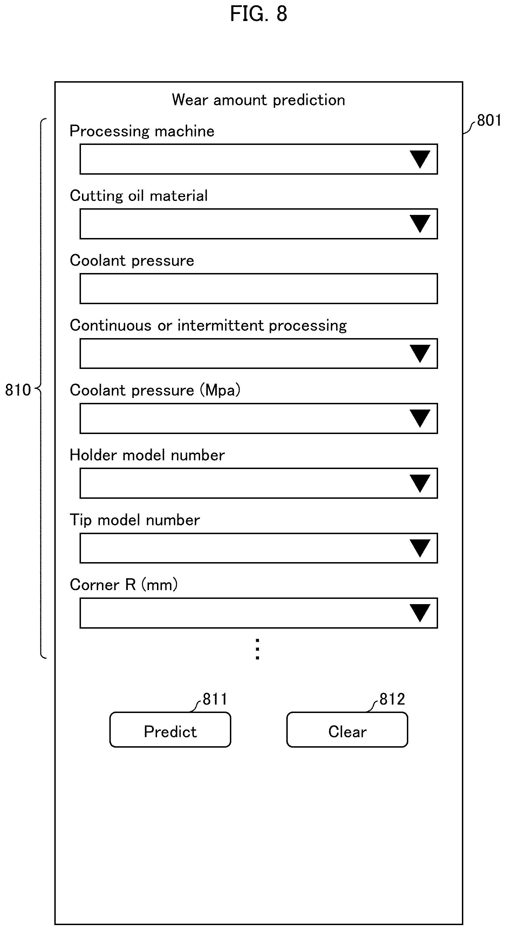

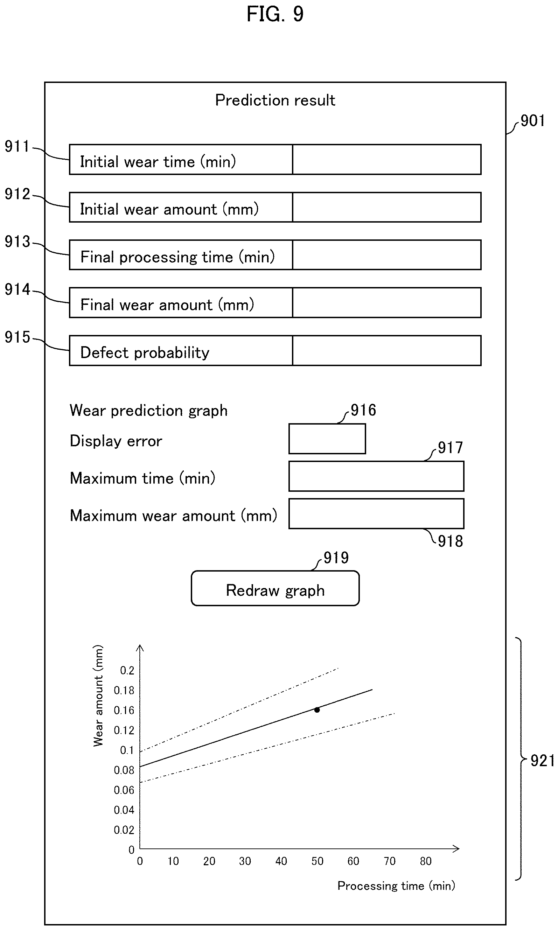

Next, with reference to FIGs. 8 and 9, an example of the screen of the display 30 will be discussed. FIG. 8 illustrates an example of the screen on which data is to be input. FIG. 9 illustrates an example of the screen which exhibits prediction results.

As illustrated in FIG. 8, the input screen allows for the input of information pertaining to a cutting tool and a workpiece for which the prediction of the amount of wear is desired. In a screen example 801, a processing machine, a cutting oil material, a coolant pressure, continuous or intermittent processing, a holder model number, a tip model number, and a corner R, for example, can be input into an input region 810. The input into the input region 801 may be information that is necessary as input data for the prediction of the amount of wear by the prediction unit 20, and is not limited to the input illustrated in the screen example 801.

As illustrated in FIG. 9, in a screen example 901 that exhibits the results, an initial wear time (min) is displayed in a region 911, an initial wear amount (mm) is displayed in a region 912, a final processing time (min) is displayed in a region 913, a final wear amount (mm) is displayed in a region 914, and a defect probability is displayed in a region 915. A region 916 receives the input that specifies whether or not an error is to be displayed. When the region 916 is checked, for example, the graph displayed in a graph display region 921 indicates the range of errors, that is, the graph 611 and the graph 612 (see FIG. 6).

A region 917 displays the maximum value of the processing time (min), and a region 918 displays the maximum value of the wear amount (mm). The maximum value of the processing time refers to the final processing time predicted. The maximum value of the wear amount refers to the amount of wear in the final processing time predicted.

The screen example 901 is not limited to the configuration in which the maximum value of the processing time (min) is displayed in the region 917 and the maximum value of the wear amount (mm) is displayed in the region 918. The linear graph 601 can be extended so that the value larger than the maximum value of the processing time (min) is displayed in the region 917 and the value larger than the maximum value of the wear amount (mm) is displayed in the region 918. For example, when the probability of a defect in addition to the final processing time and the final wear amount has been output, a probability of the defect in the final processing time that is lower than a predetermined threshold value (for example, 3%, 5%, or 10%) may cause the graph 601 to be extended.

A graph redraw button 919 is also displayed. When the graph redraw button 919 is pressed, the graph displayed in the graph display region 921 is redrawn. The graph redraw button 919 is used in such a manner that, for example, pressing the graph redraw button 919 after the region 916 has been checked or unchecked causes a graph including or not including the error range is displayed.

The graph display region 921 displays, as prediction results, the graph illustrated in FIG. 6 or FIG. 7.

As has been discussed, according to the wear amount prediction apparatus 1', the display 30 displays a graph that exhibits the results produced by the prediction unit 20. In doing so, as illustrated in FIG. 7, information extracted by a database information extraction unit 50 discussed later can be displayed in such a manner as to be overlaid on the graph exhibiting the results produced by the prediction unit 20. Thus, a user can easily determine whether or not the results predicted with use of the trained model is suitable or unsuitable.

### [Flow of process]

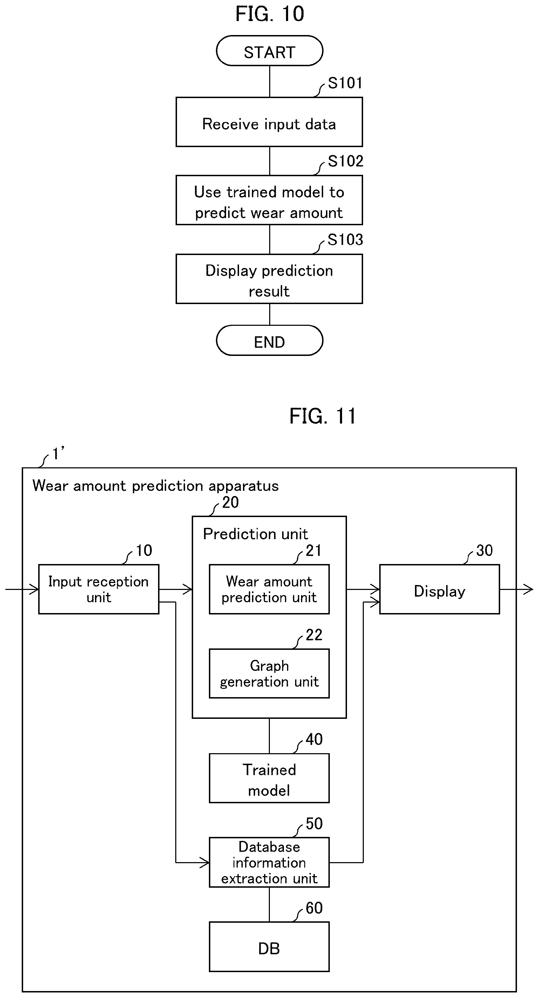

Next, with reference to FIG. 10, a flow of the process in the wear amount prediction apparatus 1 will be discussed. FIG. 10 is a flowchart illustrating the flow of the process in the wear amount prediction apparatus 1.

As illustrated in FIG. 10, first, the wear amount prediction apparatus 1 receives the input of input data into the input reception unit 10 (S101). Next, the prediction unit 20 uses the trained model 40 to predict the amount of wear (S102; prediction step). Lastly, the display 30 displays the prediction results produced by the prediction unit 20 (S103; displaying step).

As has been discussed, in the present embodiment, the wear amount prediction apparatus 1 includes the prediction unit 20 that uses the trained model 40 to predict the amount of wear of a cutting tool in accordance with a processing time and the display 30 that displays information based on the prediction results produced by the prediction unit 20.

The trained model 40 is generated by performing machine learning with use of training data which is a dataset including
(1) at least one selected from the group consisting of information which pertains to a cutting tool, a condition which concerns cutting, and information which pertains to a workpiece and
(2) a processing time for which the cutting tool was used, the amount of wear of the cutting tool which is due to processing, an initial wear amount which indicate the amount of wear of the cutting tool when an initial time has elapsed from the start of the cutting by the cutting tool, and the initial time.

The prediction unit 20 inputs, into the trained model 40, data that includes at least one selected from the group consisting of information pertaining to the cutting tool, a condition concerning cutting, and information pertaining to a workpiece, and then predicts the amount of wear.

The aforementioned configuration allows a user to recognize how much wear occurs with what cutting tool, what cutting conditions, and how much use. Thus, the user can recognize the amount of wear of the cutting tool in any processing time. Since changing the values of input data makes it possible to recognize a change in the amount of wear, the amount of wear can also be simulated. Thus, the amount of wear based on the selection of the cutting tool can be recognized, and therefore the selection of the cutting tool which is suitable for the workpiece is easy.

The surface of the cutting tool for which the prediction unit 20 predicts the amount of wear may differ depending on the type of cutting tool. For example, the surface for which the amount of wear is to be predicted may vary between a tip that is formed with an ultra-hard alloy and a tip that is formed with cubic boron nitride (CBN). Examples of a possible surface for which the amount of wear is to be predicted include a tip rake face, a lateral flank surface, a front flank surface, and a corner R. The amount of wear, such as crater wear of the rake face, boundary wear of the lateral flank surface, and boundary wear of the front flank surface, may be predicted.

While the portion that wears vary depending on the type of cutting tool, the amount of wear of a surface that is appropriate as a subject of prediction can be predicted.

In the aforementioned embodiment, the configuration in which the display 30 displays the prediction results produced by the prediction unit 20 was discussed. However, another external apparatus may provide the prediction results produced by the prediction unit 20. If an application that is capable of executing a process using prediction results is installed in an external apparatus, the external apparatus can use the prediction results to execute various processes.

### Embodiment 2

The following description will discuss another embodiment of the present disclosure. For convenience of description, members having functions identical to those described in the aforementioned embodiment are assigned identical referential numerals and their descriptions are omitted.

In the present embodiment, with reference to FIG. 11, a wear amount prediction apparatus 1' will be discussed. FIG. 11 is a functional block diagram illustrating the main configuration of the wear amount prediction apparatus 1'. As illustrated in FIG. 11, in the present embodiment, the wear amount prediction apparatus 1' includes the database information extraction unit 50 and a database (DB) 60 in addition to the configuration of the wear amount prediction apparatus 1 in Embodiment 1 discussed above.

The DB 60 stores information which indicates the amounts of wear of cutting tools due to use and which is associated with various pieces of information.

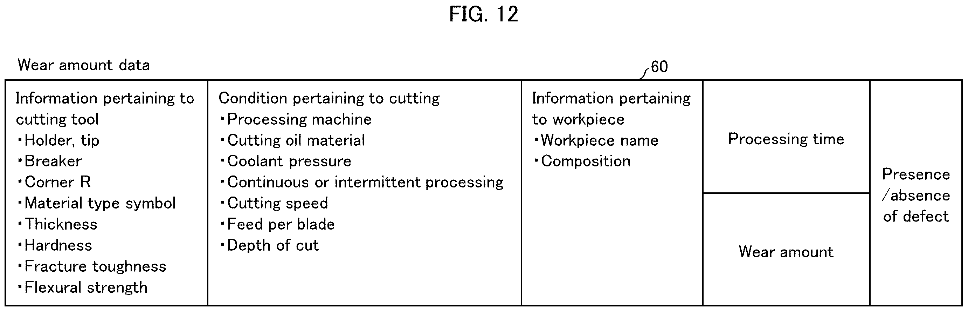

FIG. 12 illustrates an example of wear amount data which is stored in the DB 60. The wear amount data is information in which information pertaining to a cutting tool, a condition concerning cutting, information pertaining to a workpiece, a processing time, a wear amount, and the presence/absence of a defect are associated with each other. As illustrated in FIG. 12, for example, information pertaining to a cutting tool, conditions concerning cutting, information pertaining to a workpiece, a processing time, a wear amount, and the presence/absence of a defect are associated with each other and stored in the DB 60. The information pertaining to a cutting tool include a holder, a tip (holder model number, tip model number), a breaker, a corner R, a material type symbol, thickness, hardness, fracture toughness, and flexural strength. The conditions concerning cutting include a processing machine, a cutting oil material, a coolant pressure, continuous or intermittent processing, a cutting speed, a feed per blade, and the depth of cut. The information pertaining to a workpiece include a workpiece name and the composition. These pieces of information are not all mandatory, and only an optional piece thereof may be associated.

The database information extraction unit 50 extracts, from the DB 60, wear amount data which is entirely or partially identical to the input data received at the input reception unit 10 in terms of information pertaining to a workpiece and the like, and provides a notification to the display 30. The display 30 displays both the prediction results produced by the prediction unit 20 and the extraction results produced by the database information extraction unit 50.

### [Example of screen of display 30]

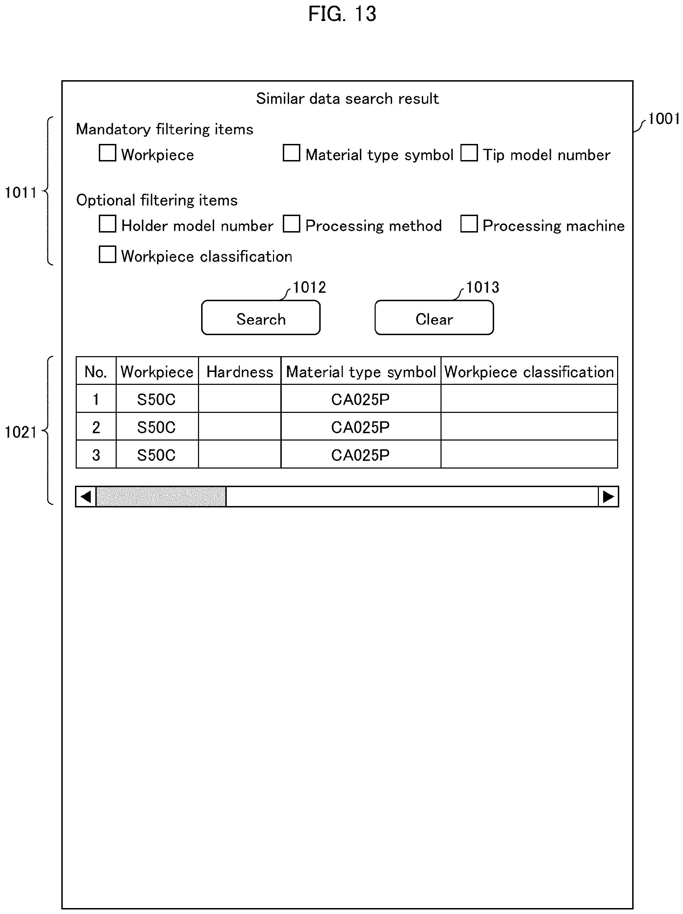

Next, with reference to FIG. 13, an example of the screen displaying the extraction result produced by the database information extraction unit 50 will be discussed. FIG. 13 illustrates an example of the screen displaying the extraction results produced by the database information extraction unit 50.

In a screen example 1001 illustrated in FIG. 13, a region 1011 and a region 1021 are separately displayed. The region 1011 displays "workpiece", "material type symbol", and "tip model number" in a selectable manner as mandatory filtering items, and displays "holder model number", "processing method", "processing machine", and "workpiece classification" in a selectable manner as optional filtering items. A search button 1012 and a clear button 1013 are also displayed.

### The region 1021 displays search results.

When the search button 1012 has been pressed, wear amount data is extracted from the DB 60 on the basis of the mandatory filtering item(s) and the item(s) selected from the optional filtering items, and the extraction results are displayed on the region 1021. As in the case of the aforementioned graph 621 illustrated in FIG. 7, a graph that indicates the amount of wear may be displayed.

When the clear button 1022 has been pressed, the selected one(s) of the mandatory filtering items and the optional filtering items is/are released.

As has been discussed, the wear amount prediction apparatus 1' includes: the database information extraction unit 50 that extracts similar information from the DB 60 associating information which pertains to the cutting tool, a condition which concerns cutting with use of the cutting tool, a processing time for which the cutting tool was used, and a post-processing amount of wear of the cutting tool in past use, the similar information being similar in terms of information which pertains to a cutting tool, a condition which concerns cutting with use of the cutting tool, a processing time for which the cutting tool was used, and a post-processing amount of wear of the cutting tool. The display 30 displays not only the result of the prediction by the prediction unit 20 but also the similar information which has been extracted by the database information extraction unit 50.

Thus, with use of the information extracted from the DB 60, a user can recognize the actual conditions of a cutting tool in the past use. The user can then use this result as a basis for determining whether the results predicted with use of the trained model 40 is suitable or unsuitable.

### Embodiment 3

The following description will discuss another embodiment of the present disclosure. For convenience of description, members having functions identical to those described in the aforementioned embodiments are assigned identical referential numerals and their descriptions are omitted.

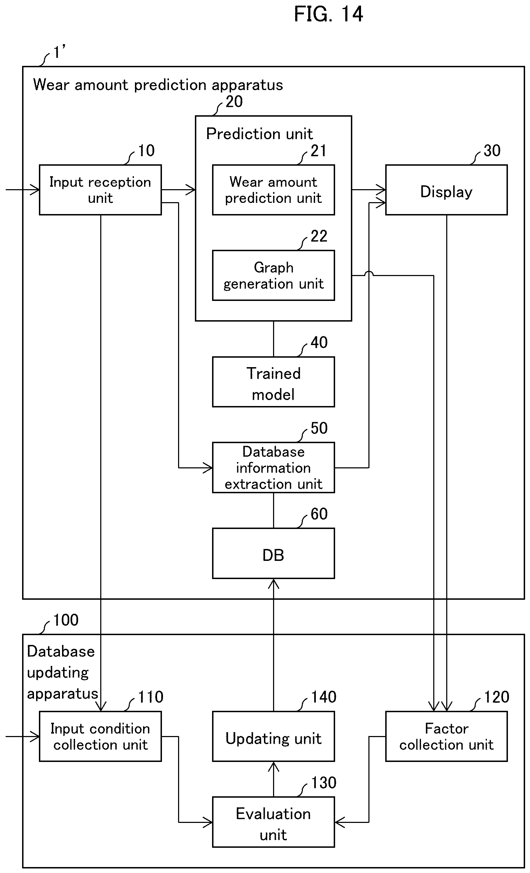

In the present embodiment, with reference to FIG. 14, a wear amount prediction apparatus 1' and a database updating apparatus 100 will be discussed. FIG. 14 is a functional block diagram illustrating the main configurations of the wear amount prediction apparatus 1' and the database updating apparatus 100 in the present embodiment. As illustrated in FIG. 14, in the present embodiment, the database updating apparatus 100 is included in addition to the aforementioned wear amount prediction apparatus 1'.

The database updating apparatus 100 updates a DB 60, and includes an input condition collection unit 110, a factor collection unit 120, an evaluation unit 130, and an updating unit 140.

The input condition collection unit 110 collects input data received at the input reception unit 10, and provides a notification to the evaluation unit 130.

In the present embodiment, a prediction unit 20 derives not only the aforementioned wear amount prediction but also the degree of importance of factors that affected the predictions of the presence/absence of a defect, a final processing time, and a final wear amount. The factor collection unit 120 then collects, from the prediction unit 20, the factors that affected the presence/absence of a defect, the final processing time, and the final wear amount, and provides a notification to the evaluation unit 130.

The display 30 may display the factors which have been derived by the prediction unit 20. Displaying the factors allows a user to recognize which factors affected the presence/absence of a defect, the final processing time, and the final wear amount.

The display 30 may display a plurality of factors derived by the prediction unit 20 and the degree of the effect of each factor. Thus, the user can recognize the degree of each factor that affected the presence/absence of a defect, the final processing time, and the final wear amount.

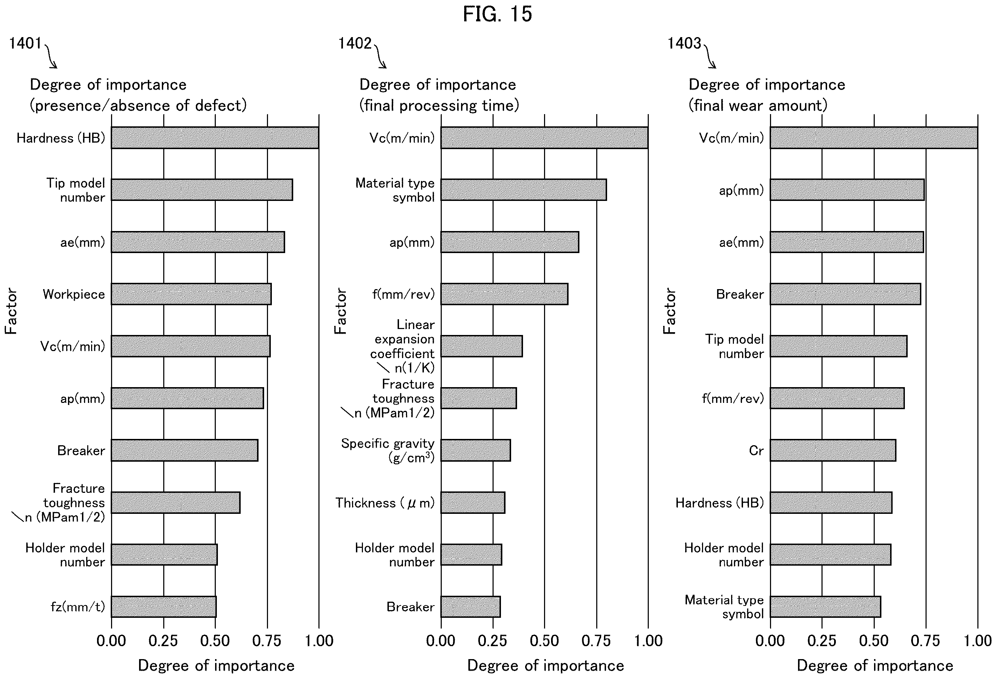

The factors will be discussed with reference to FIG. 15. FIG. 15 illustrates the degrees (levels) of importance of factors that affected the predictions of the presence/absence of a defect, a final processing time, and a final wear amount. In FIG. 15, 1401 indicates the degrees of importance of the factors pertaining to the presence/absence of a defect, 1402 indicates the degrees of importance of the factors pertaining to the final processing time, and 1403 indicates the degrees of importance of the factors pertaining to the final wear amount.

As indicated by 1401 in FIG. 15, the factor that affect the prediction of the presence/absence of a defect are, in order of importance, hardness (HB), tip model number, ae (mm), workpiece, Vc (m/min), ap (mm), breaker, fracture toughness (MPa·m^{1/2}), holder model number, and fz (mm/t). It should be noted here that hardness (HB) refers to the hardness of a workpiece. Ae (mm) refers to the width to be removed per pass. Vc (m/min) refers to a cutting speed. Ap (mm) refers to a thickness amount removed per pass. Fz (mm/t) refers to a speed at which a blade advances.

As indicated by 1402 in FIG. 15, the factors that affect the prediction of the final processing time are, in order of importance, Vc (m/min), material type symbol, ap (mm), f (mm/rev), linear expansion coefficient (K⁻¹), fracture toughness (MPa·m^{1/2}), specific gravity (g/cm³), thickness (µm), holder model number, and breaker. It should be noted here that f (mm/rev) refers to a speed at which a cutting tool advances per rotation, and corresponds to the aforementioned "feed per blade" × "number of blades". Linear expansion coefficient (K⁻¹) refers to an expansion coefficient of the base material of a tip. Specific gravity (g/cm³) refers to specific gravity of the base material of a tip.

As indicated by 1403 in FIG. 15, the factors that affect the prediction of the final wear amount are, in order of importance, Vc (m/min), ap (mm), ae (mm), breaker, tip model number, f (mm/rev), Cr hardness (HB), holder model number, and material type symbol. It should be noted here that Cr refers to information pertaining to the composition of a workpiece, and is the amount of chromium contained in the workpiece.

The evaluation unit 130 uses the information which has been obtained from the input condition collection unit 110 and which pertains to input data and uses the factors obtained from the factor collection unit 120 and the degree of importance thereof to evaluate whether or not wear amount data should be stored in a DB 60. The evaluation unit 130 then notifies the updating unit 140 of information that has high evaluation.

For example, if "workpiece" is frequently input as input data, the evaluation unit 130 determines that "workpiece" is highly evaluated, and provides a notification to the updating unit 140. The evaluation unit 130 also determines that, for example, a factor that exceeds 0.5 in degree of importance is highly evaluated, and provides a notification to the updating unit 140.

The updating unit 140 updates the DB 60 by storing, in the DB 60, wear amount data that includes information of which the updating unit 140 was notified by the evaluation unit 130. In this case, a trained model 40 in addition to the DB 60 may be updated.

The evaluation unit 130 may be run by artificial intelligence (AI). In such a case, the AI may operate in the database updating apparatus 100 or may operate in another apparatus (such as an edge computer or a cloud server).

The wear amount prediction apparatuses 1 and 1' discussed above can bring about efficient use of cutting tools. Thus, a contribution to the achievement of the sustainable development goals (SDGs) can be made.

### [Software Implementation Example]

The functions of the wear amount prediction apparatus 1 (hereinafter, referred to as "apparatus") can be realized by a program for causing a computer to function as the apparatus, the program causing the computer to function as the control blocks (particularly, the sections included in the prediction unit 20) of the apparatus.

In this case, the apparatus includes, as hardware for executing the program, a computer that includes at least one control device (e.g., a processor) and at least one storage device (e.g., a memory). By the control device executing the program with use of the storage device, the functions described in the foregoing embodiments are realized.

The program may be recorded in one or more non-transitory computer-readable recording media. The one or more recording media may or may not be included in the apparatus. In the latter case, the program may be made available to the apparatus via any wired or wireless transmission medium.

Alternatively, all or part of the functions of the control blocks can be realized by a logic circuit. For example, the present disclosure encompasses, in its scope, an integrated circuit in which a logic circuit that functions as each of the control blocks is formed. Alternatively, the functions of the control blocks can be realized, for example, by a quantum computer.

The invention according to the present disclosure has been described based on various drawings and examples. However, the invention according to the present disclosure is not limited to the aforementioned embodiment. That is, the invention according to the present disclosure can be altered within the scope of the present disclosure, and the invention according to the present disclosure also encompasses, in its technical scope, any embodiment derived by appropriately combining technical means disclosed in differing embodiments. That is, it should be noted that a person skilled in the art can easily make various changes and alterations based on the present disclosure. It should also be noted that these changes and alterations are encompassed in the scope of the present disclosure.

### REFERENCE SIGNS

1 Wear amount prediction apparatus
10 Input reception unit
20 Prediction unit
21 Wear amount prediction unit
22 Graph generation unit
30 Display
40 Trained model
50 Database information extraction unit
60 DB
100 Database updating apparatus
110 Input condition collection unit
120 Factor collection unit
130 Evaluation unit
140 Updating unit

## Claims

1. A wear amount prediction apparatus comprising:
a prediction unit that predicts, with use of a trained model, an amount of wear of a cutting tool in accordance with a processing time; and
a display that displays information which is based on a result of prediction by the prediction unit, wherein:
the trained model being generated by performing machine learning with training data using input data and output data as a dataset, the input data being information which pertains to the cutting tool, a condition which concerns cutting, and information which pertains to a workpiece and the output data being a processing time for which the cutting tool was used, the amount of wear of the cutting tool which is due to processing, an initial wear time which is from a start of the cutting by the cutting tool until completion of initial wear, and an initial wear amount which indicates an amount of wear of the cutting tool when the initial wear time has elapsed; and
the prediction unit inputs, into the trained model, data that includes information pertaining to the cutting tool, a condition concerning cutting, and information pertaining to a workpiece, and then predicts the amount of wear.

2. The wear amount prediction apparatus according to claim 1, wherein:
the dataset includes information pertaining to a factor that contributes to wear of the cutting tool; and
the display displays a factor that contributes to the wear of the cutting tool predicted by the prediction unit.

3. The wear amount prediction apparatus according to claim 2, wherein the display displays a plurality of factors that contribute to the wear of the cutting tool predicted by the prediction unit and displays a degree of an effect of each of the plurality of factors on the wear.

4. The wear amount prediction apparatus according to any one of claims 1 through 3, wherein:
the dataset includes information pertaining to the presence/absence of a defect in the cutting tool; and
the display displays a probability of a defect in the cutting tool predicted by the prediction unit.

5. The wear amount prediction apparatus according to any one of claims 1 through 4, wherein the dataset includes no information corresponding to a cutting tool in which a defect has occurred within an unusually short period of time after processing started.

6. The wear amount prediction apparatus according to any one of claims 1 through 5, wherein a surface of the cutting tool for which the amount of wear is predicted differs depending on the type of the cutting tool.

7. The wear amount prediction apparatus according to any one of claims 1 through 6, wherein the display displays the result of the prediction by the prediction unit with use of a graph allowing the processing time and the amount of wear to be viewed.

8. The wear amount prediction apparatus according to any one of claims 1 through 7, further comprising
a database information extraction unit that extracts similar information from a database associating information which pertains to a cutting tool, a condition which concerns cutting with use of the cutting tool, a processing time for which the cutting tool was used, and a post-processing amount of wear of the cutting tool in past use, the similar information being similar in terms of information which pertains to a cutting tool, a condition which concerns cutting with use of the cutting tool, a processing time for which the cutting tool was used, and a post-processing amount of wear of the cutting tool,
the display displays not only the result of the prediction by the prediction unit but also the similar information which has been extracted by the database information extraction unit.

9. The wear amount prediction apparatus according to claim 8, wherein the display displays, in a single graph, the result by the prediction unit and the similar information extracted by the database information extraction unit.

10. A wear amount prediction method comprising:
predicting, with use of a trained model, an amount of wear of a cutting tool in accordance with a processing time; and
displaying information which is based on a result in the predicting, wherein:
the trained model being generated by performing machine learning with training data using input data and output data as a dataset, the input data being information which pertains to the cutting tool, a condition which concerns cutting, and information which pertains to a workpiece and the output data being a processing time for which the cutting tool was used, the amount of wear of the cutting tool which is due to processing, an initial wear time which is from a start of the cutting by the cutting tool until completion of initial wear, and an initial wear amount which indicates an amount of wear of the cutting tool when the initial wear time has elapsed; and
in the predicting, data that includes information pertaining to the cutting tool, a condition concerning cutting, and information pertaining to a workpiece is input into the trained model, and then the amount of wear is predicted.

11. A control program for causing a computer to function as the wear amount prediction apparatus according to claim 1, the control program causing the computer to function as the prediction unit.

12. A computer-readable storage medium in which the control program according to claim 11 is stored.
